# EUROPEAN PATENT APPLICATION

(11) **EP 1 986 261 A1**
(43) Date of publication of application: **29.10.2008**
(21) Application number: 07708324.4
(22) Date of filing: 09.02.2007
(51) Int. Cl.: H01M 8/04, H01M 8/00, H01M 8/12

(54) **SINGLE CHAMBER TYPE SOLID OXIDE FUEL CELL**

(30) Priority: 17.02.2006 JP 2006040768
(71) Applicant: KABUSHIKI KAISHA ATSUMITEC, Hamamatsu-shi, Shizuoka-ken (JP)
(72) Inventor: UCHIYAMA, Naoki, Hamamatsu-shi, Shizuoka 4310192 (JP)
(74) Representative: Burt, Matthew Thomas
(86) International application number: PCT/JP2007/052388
(87) International publication number: WO 2007/094262

(57) **Abstract**

A solid-oxide fuel cell having a fuel pole and an air pole joined to a solid oxide electrolyte is arranged in a combustion exhaust gas flow channel of an engine or the like (fuel cell containing section), thereby placed in a flow of high-temperature combustion exhaust gas introduced through an exhaust gas introduction section into the fuel cell containing section and discharged through an exhaust gas discharge section, so that the solid-oxide fuel cell is heated by the thermal energy of the combustion exhaust gas and generates electric power using a hydrocarbon compound and carbon oxide in the combustion exhaust gas, as fuel gas.

## Description

### Technical Field

This invention relates to a single-chamber-type solid oxide fuel cell device.

### Background Art

A solid oxide fuel cell (SOFC) device has a solid oxide fuel cell comprising a fuel pole (hydrogen pole) and an air pole (oxygen pole) joined to (formed on) a solid oxide electrolyte. The fuel cell device generates electric power by a fuel gas and air or the like being supplied to the fuel cell. Since the fuel cell operates at high temperature, it can have high output and high power generation efficiency even without using precious metals.

A so-called dual-chamber-type solid oxide fuel cell, designed such that a fuel gas is supplied to a fuel pole and air or the like is supplied to an air pole that is separated from the fuel pole by a separator, has however a complicated structure because of the provision of the separator, etc.

In contrast, a single-chamber-type solid oxide fuel cell has a fuel pole and an air pole formed on a solid oxide electrolyte and not separated by a separator, and generates electric power by being placed in an atmosphere consisting of a mixture of a fuel gas, such as hydrogen or methane, and air or the like.

Single-chamber-type solid oxide fuel cells of this type are disclosed in Japanese Unexamined Patent Publication No. 2002-280015, Japanese Unexamined Patent Publication No. 2002-280017 and Japanese Unexamined Patent Publication No. 2002-313357, for example.

Since the single-chamber-type solid oxide fuel cell does not require a separator, it can be simple in structure and low in price.

The fuel cell using a solid oxide as an electrolyte, however, generates electric power in a high-temperature atmosphere. Unless the fuel cell is placed in a high-temperature atmosphere of, for example 500°C-1000°C or higher, the fuel cell does not generate electric power. Thus, as with the dual-chamber-type solid oxide fuel cell, the conventional single-chamber-type solid oxide fuel cell requires a heating device for creating a high-temperature atmosphere, such as a heater, and an energy source for driving it, which imposes a limit on structural simplification.

Further, a hybrid system composed as an energy source by combining an internal or external combustion engine with a single-chamber-type solid oxide fuel cell device requires both a fuel for the internal combustion engine or the like and a fuel gas for the fuel cell, which results in a complicated structure and an increase in production costs, running costs, etc. Such hybrid system further requires a device for purifying combustion exhaust gas, which causes further structural complication and further increase in costs.

### Disclosure of the Invention

An object of the present invention is to provide a single-chamber-type solid oxide fuel cell device which can create a high-temperature atmosphere allowing a fuel cell to generate electric power (atmosphere of power generation start temperature or higher), without using a heater or the like, thereby obviating the problems as mentioned above.

Another object of the present invention is to provide a single-chamber-type solid oxide fuel cell device which can generate electric power, not using a fuel other than a fuel for an internal combustion engine or the like.

Another object of the present invention is to provide a single-chamber-type solid oxide fuel cell device which can constitute a hybrid system simple in structure and low in price.

Another object of the present invention is to provide a single-chamber-type solid oxide fuel cell device which can preferably purify combustion exhaust gas emitted from an internal combustion engine or the like, thereby allowing further structural simplification and reduction in costs.

In order to achieve the above objects, a single-chamber-type solid oxide fuel cell device according to the present invention comprises an exhaust gas introduction section for introducing combustion exhaust gas; a fuel cell containing section allowing the combustion exhaust gas introduced through the exhaust gas introduction section to flow through; an exhaust gas discharge section for discharging the combustion exhaust gas that has passed through the fuel cell containing section; and a solid-oxide fuel cell having a fuel pole and an air pole joined to a solid oxide electrolyte and arranged inside the fuel cell containing section.

Since the single-chamber-type solid oxide fuel cell device according to the present invention has the above-described structure, the solid oxide fuel cell is heated to the power generation start temperature or higher, for example to 500°C-1000°C or higher, by high-temperature combustion exhaust gas introduced through the exhaust gas introduction section into the fuel cell containing section and discharged through the exhaust gas discharge section. Thus, without a separately provided heating means such as a heater, the fuel cell can be caused to generate electric power.

When the fuel cell is exposed to the high-temperature combustion exhaust gas in this manner, the air pole reacts with air, etc. contained in the combustion exhaust gas, thereby producing ions (oxygen ions, for example) required for the fuel cell to work.

The ions produced move from the air pole to the fuel pole through the solid oxide electrolyte of the fuel cell, and at the fuel pole, reacts with CHₓ and COₓ contained in the combustion exhaust gas, thereby producing carbon dioxide (CO₂) and water (H₂O). The carbon dioxide and water (water vapor) thus produced are discharged to the outside, with the combustion exhaust gas.

Thus, the single-chamber-type solid oxide fuel cell device according to the present invention can decrease CHₓ (hydrocarbon compounds) such as methane gas and COₓ (carbon oxide) such as carbon monoxide in the combustion exhaust gas, and thus purify the combustion exhaust gas.

As understood from the above, in the single-chamber-type solid oxide fuel cell device according to the present invention, the fuel cell is heated by the thermal energy of combustion exhaust gas and operates using CHₓ and COₓ in the combustion exhaust gas as fuel gas, thereby decreasing CHₓ and Coₓ in the combustion exhaust gas, thus purifying the combustion exhaust gas.

As mentioned above, in the single-chamber-type solid oxide fuel cell device according to the present invention, an atmosphere of the power generation start temperature or higher can be created from the thermal energy of combustion exhaust gas, without using a heater or the like. This enables structural simplification and reduction in costs.

Further, in the single-chamber-type solid oxide fuel cell device according to the present invention, the solid oxide fuel cell generates electric power using combustion exhaust gas emitted from, for example an internal combustion engine. Thus, the present invention enables construction of a hybrid system with a simplified structure at a reduced cost.

Furthermore, in the single-chamber-type solid oxide fuel cell device according to the present invention, the solid oxide fuel cell purifies combustion exhaust gas emitted from, for example an internal combustion engine. Also for this reason, the present invention serves the construction of a hybrid system with a simplified structure at a reduced cost.

It is to be noted that the solid oxide fuel cell may comprise a first solid oxide fuel cell arranged inside the fuel cell containing section and a second solid oxide fuel cell which is arranged downstream of the first solid oxide fuel cell as viewed in the direction of flow of the combustion exhaust gas and power generation start temperature of which is lower than the first solid oxide fuel cell.

### Brief Description of the Drawings

[FIG. 1] A diagram showing an example of a cross-sectional structure of a single-chamber-type solid oxide fuel cell device according to one embodiment of the present invention.
[FIG. 2] A diagram showing a variation of the embodiment shown in FIG. 1.

### Best Mode of Carrying out the Invention

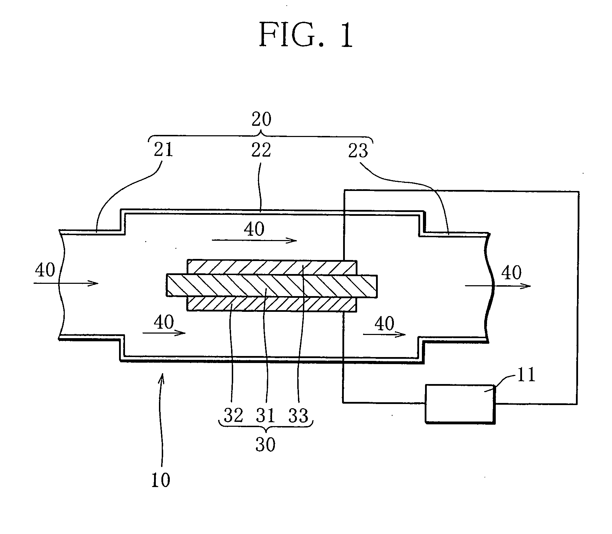

Referring to FIG. 1, a single-chamber-type solid oxide fuel cell device according to one embodiment of the present invention will be described below.

First, the structure of the single-chamber-type solid oxide fuel cell device will be explained.

The single-chamber-type solid oxide fuel cell device 10 has an exhaust gas flow channel 20 and a solid-oxide fuel cell 30. The exhaust gas flow channel 20 includes an exhaust gas introduction section 21 for introducing combustion exhaust gas 40 emitted from an engine (not shown) such as a gasoline engine, a fuel cell containing section 22 for containing the solid-oxide fuel cell 30 and allowing the combustion exhaust gas 40 to flow through, and an exhaust gas discharge section 23 for discharging the combustion exhaust gas 40 that has passed across the interior of the fuel cell containing section 22.

The solid-oxide fuel cell 30 includes a solid oxide electrolyte 31 formed into a rectangular flat plate, for example. An air pole 32 is formed on one side of the solid oxide electrolyte 31, and a fuel pole 33 is formed on the other side of the solid oxide electrolyte 31. Combustion exhaust gas 40 emitted from the engine is introduced to the exhaust gas introduction section 21.

Next, materials constituting the solid-oxide fuel cell 30 will be explained.

The solid oxide electrolyte 31 can be 8mol-YSZ (yttria-stabilized zirconia), 5mol-YSZ, SDC (scandia-doped ceria), GDC (gadolinium-doped ceria), ScSZ(scandia-stabilized zirconia) or the like, for example.

The air pole 32 can be formed of LSM (lanthanum strontium manganite), LSC (lanthanum strontium cobaltite) or the like, for example.

The fuel pole 33 can be formed of NiO+YSZ, NiO+SDC, NiO+GDC, LSCM (lanthanum strontium cobalt manganite), FeO₃ or the like, for example.

Next, the operation of the single-chamber-type solid oxide fuel cell device 10 having the structure describe above will be described.

Combustion exhaust gas 40 emitted from the engine contains CHₓ (hydrocarbon compounds), Coₓ (carbon oxide), air, etc. The combustion exhaust gas at high temperature of 500°C-1000°C introduced into the exhaust gas channel 20 from the exhaust gas introduction section 21 heats the solid-oxide fuel cell 30 to the power generation start temperature or higher.

At the air pole 32 of the solid-oxide fuel cell 30 thus heated, oxygen ions (O²⁻) are produced from air contained in the combustion exhaust gas 40. The oxygen ions move from the air pole 32 to the fuel pole 33 through the solid oxide electrolyte 31 of the fuel cell. The oxygen ions that have moved to the fuel pole 33 react with CHₓ and COₓ contained in the combustion exhaust gas 40 at the fuel pole 33, thereby producing carbon dioxide (CO₂) and water (H₂O). Thus, when a load 11 is connected to the air pole 32 and the fuel pole 33, electrons carried by the oxygen ions travel from the fuel pole 33 (negative electrode) to the air pole 32 (positive electrode) so that the load 11 is supplied with electric power.

As understood from the above, the single-chamber-type solid oxide fuel cell device 10 can operate as a fuel cell device to generate electric power on waste heat (thermal energy) of the combustion exhaust gas 40 from the engine and CHₓ and COₓ contained in the combustion exhaust gas 40. Thus, in order to operate as a fuel cell device, the single-chamber-type solid oxide fuel cell device 10 does not need to be supplied with a fuel gas in a separate manner, in addition to CHₓ and COₓ contained in the combustion exhaust gas 40. Further, CHₓ and COₓ in the combustion exhaust gas 40 introduced through the exhaust gas introduction section 21 are changed into carbon dioxide and water (water vapor) by the reaction at the solid-oxide fuel cell 30 and discharged through the exhaust gas discharge section 23 to the outside.

When such single-chamber-type solid oxide fuel cell device 10 is incorporated into a car such that combustion exhaust gas from an engine such as a gasoline engine or a diesel engine is introduced into the exhaust gas flow channel 20, the car can obtain energy also from the single-chamber-type solid oxide fuel cell device 10, so that fuel economy is improved and the combustion exhaust gas from the engine is purified.

The single-chamber-type solid oxide fuel cell device 10 may be arranged inside a muffler of a car. Needless to say, the single-chamber-type solid oxide fuel cell device 10 is also applicable to motorcycles and a variety of vehicles other than cars.

To sum up, when applied to a vehicle or device having an internal or external combustion engine as a power source (energy source), the single-chamber-type solid oxide fuel cell device according to the present invention can generate electric power using combustion exhaust gas. This allows electric power to be generated with a simple structure so that fuel economy can be improved, and combustion exhaust gas can be purified. In addition, this enables structural simplification and reduction in costs.

The single-chamber-type solid oxide fuel cell device according to the present invention is not limited to the above-described embodiment.

For example, the solid-oxide fuel cell may be composed of a plate of an electrolyte with a fuel pole and an air pole formed on one side. Alternatively, the solid-oxide fuel cell may be composed of a solid oxide electrolyte formed into a cylinder, and a fuel pole (or an air pole) and an air pole (or a fuel pole) formed on the inner and outer surfaces of the cylinder, respectively.

The solid oxide, and the materials constituting the fuel pole and the air pole are not limited to those mentioned in the description of the embodiment, as long as the power generation start temperature is equal or lower than the temperature of the combustion exhaust gas.

Further, a plurality of solid-oxide fuel cells may be arranged inside the exhaust gas flow channel and electrically combined in series or parallel, to cause them to generate electric power.

Further, it is possible to use a first solid-oxide fuel cell higher in power generation start temperature and a second solid-oxide fuel cell lower in power generation start temperature than the first solid-oxide fuel cell. In this case, the first solid-oxide fuel cell may be arranged on the upstream side and the second solid-oxide fuel cell may be arranged on the downstream side as viewed in the direction of flow of the combustion exhaust gas, where the first and second solid-oxide fuel cell may be electrically combined in series or parallel.

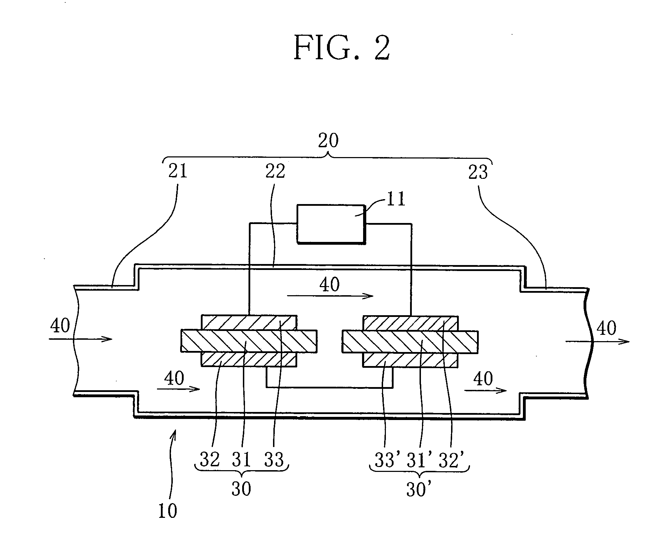

FIG. 2 shows a fuel cell device as a variation of the above-described embodiment, which includes a plurality of solid-oxide fuel cell as mentioned above. This variation is similar to the above-described embodiment, except for including a plurality of solid-oxide fuel cell. The members similar to those of the above-described embodiment are assigned the same reference signs.

Specifically, a first solid-oxide fuel cell 30, similar in structure to the fuel cell of the above-described embodiment, is arranged inside the fuel cell containing section 22. Downstream of the first solid-oxide fuel cell 30 as viewed in the direction of flow of the combustion exhaust gas 40, a second solid-oxide fuel cell 30', having a solid oxide electrolyte 31', an air pole 32' and a fuel pole 33' like the first solid-oxide fuel cell 30, is arranged. The second solid-oxide fuel cell 30' is lower in power generation start temperature than the first solid-oxide fuel cell 30.

The first solid-oxide fuel cell 30 and the second solid-oxide fuel cell 30' are electrically combined in series and supply electric power to the load 11.

The use of a plurality of solid-oxide fuel cell in this manner allows more electric power to be drawn from the combustion exhaust gas, and results in more purified combustion exhaust gas. Further, the power generation start temperature differing depending on the position enables more efficient power generation in a broader range of temperatures.

Although in the above-described embodiment and variation, combustion exhaust gas from an engine is used to generate electric power, combustion exhaust gas from a combustion device other than the engine may be used.

## Claims

1. A single-chamber-type solid oxide fuel cell device, comprising:
an exhaust gas introduction section for introducing combustion exhaust gas;
a fuel cell containing section allowing the combustion exhaust gas introduced through the exhaust gas introduction section to flow through;
an exhaust gas discharge section for discharging the combustion exhaust gas that has passed through the fuel cell containing section; and
a solid-oxide fuel cell having a fuel pole and an air pole joined to a solid oxide electrolyte and arranged inside the fuel cell containing section.

2. The single-chamber-type solid oxide fuel cell device according to claim 1, wherein combustion exhaust gas emitted from an internal or external combustion engine is introduced to the exhaust gas introduction section.

3. The single-chamber-type solid oxide fuel cell device according to claim 2, wherein the solid-oxide fuel cell reacts with either or both of a hydrocarbon compound and carbon oxide contained in the combustion exhaust gas, thereby producing either or both of carbon dioxide and hydrogen dioxide.

4. The single-chamber-type solid oxide fuel cell device according to claim 1, wherein the solid-oxide fuel cell includes a first solid-oxide fuel cell arranged inside the fuel cell containing section and a second solid-oxide fuel cell arranged downstream of the first solid-oxide fuel cell as viewed in the direction of flow of the combustion exhaust gas and lower in power generation start temperature than the first solid-oxide fuel cell.
